# EUROPÄISCHE PATENTSCHRIFT

(11) **EP 1 080 238 B1**
(45) Veröffentlichungstag und Bekanntmachung des Hinweises auf die Patenterteilung: **28.11.2001**
(21) Anmeldenummer: 99923291.1
(22) Anmeldetag: 20.05.1999
(51) Int. Cl.: C22B 7/00, C22B 3/00

(54) **VERFAHREN ZUM AUFBEREITEN VON ZUMINDEST EIN NICHT-EISENMETALL UND/ODER VERBINDUNGEN DAVON ENTHALTENDEN RESTSTOFFEN**
METHOD FOR PROCESSING RESIDUES CONTAINING AT LEAST ONE NON-FERROUS METAL AND/OR COMPOUNDS THEREOF
PROCEDE PERMETTANT DE PREPARER AU MOINS UN METAL NON FERREUX ET/OU DES DECHETS CONTENANT SES COMPOSES

(30) Priorität: 20.05.1998 AT 87498
(43) Veröffentlichungstag der Anmeldung: 07.03.2001
(73) Patentinhaber: VTU Engineering GmbH, 8074 Grambach (AT)
(72) Erfinder: Siebenhofer, Matthaeus, 8010 Graz (AT); Zapfel, Wilhelm Hans, 7422 Riedlingsdorf (AT); Luttenberger, Hertha, 8083 St. Stefan i. Rosental (AT)
(74) Vertreter: Schwarz, Albin, Dr.
(86) Internationale Anmeldenummer: AT9900127
(87) Internationale Veröffentlichungsnummer: WO9960176

(56) Entgegenhaltungen:
- EP-A- 0 581 995
- WO-A-92/14850
- DE-A- 2 242 351
- US-A- 4 352 786
- US-A- 5 082 493

## Beschreibung

Die Erfindung betrifft ein Verfahren zum Aufbereiten von zumindest ein Nicht-Eisenmetall, vorzugsweise gewählt aus der Gruppe umfassend Zink, Blei, Nickel, Kupfer und Cadmium, und/oder Verbindungen davon enthaltenden Reststoffen.

Sowohl bei der Herstellung von Nicht-Eisenmetallen als auch beim Recycling nichteisenmetallhältiger Sekundärrohstoffe, wie z.B. von Hüttenwerksreststoffen, insbesondere Stahlwerksstäuben, fallen erhebliche Mengen nichteisenmetallhältiger Produkte bzw. Reststoffe an (Ullmann's Encyclopedia of Industrial Chemistry, 5. Auflage, Band A28, Seite 512).

Mengenmäßig bedeutsam sind insbesondere die bei der Herstellung von Zink sowie beim Recycling von Hüttenwerksreststoffen anfallenden Mengen zinkhältiger Reststoffe. Diese Reststoffe lassen sich in drei Gruppen unterteilen:
a) Schlämme aus der elektrolytischen Zinkherstellung
b) Schlacken aus der pyrometallurgischen Bleiherstellung und Rückstände aus der pyrometallurgischen Zinkherstellung
c) Zink- und bleihältige Stäube, vorwiegend aus der Verarbeitung von Schrott

Die hohen jährlichen Frachten an diesen Reststoffen - allein in der Gruppe c) fallen in Europa, mit steigender Tendenz bezüglich Fracht und Nicht-Eisenmetallgehalt, jährlich ca. 880.000 t an (M. Hoffmann: Die Rückgewinnung von Zink und Blei aus Stäuben der Elektrostahlerzeugung, VDI Bildungswerk, BW 43-20-04, 22, und 23.9.1997) - haben bereits frühzeitig zu Überlegungen und zur Entwicklung von Verfahren geführt, die eine raffinierende Verarbeitung der genannten Reststoffe zum Ziel haben.

So ist beispielsweise in der DE-650 256 ein Verfahren zum Verarbeiten von Bleisulfat und bleisulfathaltigern Gut beschrieben. Das Verfahren wurde in der Folge auch für die Rückgewinnung von Zink aus Reststoffen der oben erwähnten Gruppe a) weiterentwickelt und über Jahrzehnte angewendet (Ullmanns Enzyklopädie der technischen Chemie, 3. Auflage, Band 19, Seite 99).

In der EP-A-0 581 995 wird ein Verfahren beschrieben, das sich die Verarbeitung aller drei Reststoffgruppen a), b) und c), insbesondere die Verarbeitung von Stahlwerksstäuben und sogenannten Konsumbatterien, zum Ziel gesetzt hat. Der pyrometallurgische Verfahrensschritt dieses Verfahrens baut auf das aus der DE-650 256 bekannte Verfahrensprinzip auf.

US-5 082 493, US-4 352 786 und WO-92/14850 beschreiben ein Verfahren zum aufbereiten von zumindest ein Nicht-Eisenmetall enthaltenden Reststoffen, wobei das Nicht-Eisenmetall aus den Reststoffen mittels eines eine Carbonsäure, eine substituierte Carbonsäure oder deren Ammoniumsalze enthaltenden Extraktionsmittels extrakiert wird.

Da Stahlwerksstäube mengenmäßig den größten Anteil an zinkhältigen Reststoffen der Gruppen a), b) und c) haben, hat es eine Vielzahl von Überlegungen gegeben, diese Reststoffgruppe einer weitgehenden Verarbeitung zuzuführen. Von diesen Verfahren hat sich wirtschaftlich bis jetzt nur das sogenannte Wälzverfahren behauptet, obwohl auch dieses Verfahren technisch schwer beherrschbar ist (Ullmanns Enzyklopädie der technischen Chemie, 4. Auflage, Band 24, Seite 599).

Das Problem der Zinkkontamination von Flugstaub in den Abgasen von Eisenschrottkonvertern und Elektroöfen ist in der Fachliteratur der Metallhüttenkunde beschrieben (F. Pawlek, Metallhüttenkunde, deGruyter, 1983, Seite 688).

Sowohl bei der Verarbeitung gemäß der DE-650 256 als auch nach dem Wälzverfahren wird das Eisen des Einsatzmaterials verschlackt und entzieht sich dadurch trotz eines mengenmäßigen Anteils bis zu 30% im Einsatzmaterial vollständig der Rückführung in die Eisenverarbeitung.

Es gibt Versuche, Stahlwerksstäube hydrometallurgisch mit dem Ziel aufzuarbeiten, sowohl das Zink als auch den eisenhältigen Rückstand zu rezyklieren (M. Hoffmann: Die Rückgewinnung von Zink und Blei aus Stäuben der Elektrostahlerzeugung, VDI Bildungswerk, BW 43-20-04, 22. und 23.9.1997). Gearbeitet wird hierbei mit ammoniumchloridhältiger Lösung. Durch die hohe Löslichkeit an Eisen im Elektrolyt und durch die eingeschränkte Rückführbarkeit des Elektrolyten ist dieses Verfahren mit einem erheblichen Aufwand an Betriebsmitteln und nur einem bedingten Recycling verbunden.

Von den anfallenden Reststoffen der Gruppen a) bis c) können in Europa mit allen verfügbaren Verarbeitungskapazitäten nur etwa die Hälfte der jährlich erzeugten Mengen verarbeitet werden, wobei die Verarbeitung zudem technisch schwer beherrschbar ist. Es gelingt nur eine teilweise Wertstoffrückführung, so daß ein erheblicher Anteil der Wertstoffe auf Deponie entsorgt werden muß. Die kurzfristig zu erwartenden Zuwachsraten an den genannten Reststoffen werden überhaupt nicht mehr bewältigbar sein.

Die vorliegende Erfindung stellt sich die Aufgabe, die oben dargelegten Nachteile und Schwierigkeiten zu beseitigen, und ein einfaches Verfahren zum Aufbereiten von zumindest ein Nicht-Eisenmetall und/oder Verbindungen davon enthaltenden Reststoffen zur Verfügung zu stellen, das bei geringem technologischen Aufwand eine selektive Trennung des Einsatzmaterials in die verschiedenen Wertstoffe und Wertstofffraktionen ermöglicht. Das Verfahren soll zudem große Schwankungen in der Zusammensetzung der Einsatzmaterialien vertragen.

Diese Aufgabe wird bei einem Verfahren der eingangs erwähnten Art dadurch gelöst, daß das Nicht-Eisenmetall aus den Reststoffen mittels eines eine Carbonsäure und/oder eine substituierte Carbonsäure und/oder deren Alkali- und/oder Ammoniumsalze und/oder Mischungen davon enthaltenden Extraktionsmittels extrahiert wird, welches Extraktionsmittel ferner einen Alkohol, einen Aldehyd, ein Keton oder einen Ester enthält.

Das Nicht-Eisenmetall kann in den Reststoffen in metallischer oder oxidischer Form oder salzartig vorliegen. Unter Extraktion wird für die Zwecke der vorliegenden Beschreibung die Abtrennung des Nicht-Eisenmetalls aus den Reststoffen verstanden, wobei das Nicht-Eisenmetall nach Abtrennung aus den Reststoffen in ionischer Form vorliegt.

Vorzugsweise wird als Carbonsäure eine Fettsäure mit 1 bis 18 C-Atomen im Molekül, insbesondere Essigsäure oder Propionsäure, eingesetzt.

Das erfindungsgemäße Verfahren wird besonders vorteilhaft zum Aufbereiten von Eisen und Nicht-Eisenmetall enthaltenden Reststoffen, insbesondere Hüttenwerksreststoffen, sowie zum Aufbereiten von bei der thermischen Verwertung sogenannter Konsumbatterien anfallenden Reststoffen eingesetzt.

Das Prinzip des erfindungsgemäßen Verfahrens liegt in der physikalisch-chemischen Wechselwirkung von Nicht-Eisenmetallen und gegebenenfalls Eisen mit Carbonsäuren, substituierten Carbonsäuren, deren Alkali- und Ammoniumsalzen oder Mischungen davon, welche Wechselwirkung zu großen Unterschieden in der Löslichkeit der verschiedenen Metallspezies als Salz in der eingesetzten Carbonsäure führt.

Die folgende Tabelle zeigt repräsentative Löslichkeitsdaten für verschiedene Metallspezies in wäßriger Lösung bei Extraktion mit Essigsäure.

| Spezies | Löslichkeit in Wasser [g/l] bei Raumtemperatur |
|---|---|
| Zinkacetat | 300 |
| Fe-III-acetat | Spuren |
| Blei-II-acetat | 443 |
| Nickelacetat | 166 |
| Kupfer-II-acetat | 72 |

Aus dieser Aufstellung ist vor allem ein großer Unterschied in der Verteilung von Eisen und Nicht-Eisenmetallen zwischen einer Extrakt- und Feststoffphase ableitbar. Diese Eigenschaft entspricht einer der Grundforderungen für das Recycling von großen Mengen an Einsatzmaterialien mit heterogener Zusammensetzung.

Der Forderung nach einer technologisch einfachen Verfahrensführung entspricht dieses Extraktionsverfahren durch die Tatsache, daß es sowohl in einem sehr großen Konzentrationsbereich der reaktiven Komponente, d.h. der Carbonsäure, substituierten Carbonsäure, deren Alkali- und Ammoniumsalze oder Mischungen davon, in wäßriger Lösung eingesetzt werden kann, als auch, daß das Verfahren in einem sehr großen Temperaturbereich bis zum Siedepunkt des Extraktionsmittels angewendet werden kann.

Dieses Verhalten wird beispielsweise durch das nahezu konzentrationsunabhängige Auflösungsverhalten von Zink in Essigsäure bestätigt (Gmelins Handbuch der anorganischen Chemie, System-Nr. 32, Zink, Ergänzungsband, Verlag Chemie, 1956, Seite 584).

Konzentration und Zusammensetzung des Extraktionsmittels und Arbeitstemperatur sind Optimierungsparameter, die die Wirtschaftlichkeit und das gewünschte Trennergebnis beeinflussen, nicht aber das Prinzip des Verfahrens. Die Zusammensetzung des Extraktionsmittels und die Konzentration der reaktiven Komponenten können nach gängigen Methoden entsprechend dem Stand der Technik analysiert und eingestellt werden.

Begleitelemente, wie der Alkalimetallanteil im Einsatzmaterial, stören im Unterschied zu den aus dem Stand der Technik bekannten Verfahren nicht, da die Extraktion auch mit den Salzen der jeweiligen Carbonsäuren dieser Elemente möglich ist.

Wesentlicher Unterschied zu den nach dem Stand der Technik angewendeten Verfahren ist neben der weiteren direkten, etwa metallurgischen Verwertbarkeit aller Produktströme des Extraktionsverfahrens, daß die Extraktion im Niedertemperaturbereich, worunter für die Zwecke der vorliegenden Beschreibung der Temperaturbereich bis zur Siedetemperatur des verwendeten Extraktionsmittels verstanden wird, vorgenommen wird, während aus dem Stand der Technik bekannte metallurgische Verfahren bei sehr hoher Temperatur auszuführen sind, um die gewünschte Aufspaltung des Einsatzmaterials in eine Wertstoffphase und in eine metallurgisch nicht weiterverwertbare Rückstandsphase zu ermöglichen. Die notwendige Arbeitstemperatur liegt bei metallurgischen Verfahren oft sehr nahe der Schmelztemperatur des Einsatzmaterials, insbesondere bei höherer Alkalibelastung. Bei Auftreten einer Schmelzphase ist aber, abgesehen von der hohen Werkstoffbelastung, die Auftrennung nicht mehr im erwünschten Ausmaß möglich.

Eine bevorzugte Ausführungsvariante des erfindungsgemäßen Verfahrens ist dadurch gekennzeichnet, daß ein bei der Extraktion verbleibender, gegebenenfalls eisenhältiger, Extraktionsrückstand einer weiteren Verarbeitung zugeführt wird. Die Verarbeitung erfolgt insbesondere in einem (Eisen-) Hüttenwerk. Hierdurch kann vorteilhaft eine wesentliche Erhöhung der Wirtschaftlichkeit des Verfahrens erzielt werden.

Speziell bei der Extraktion von Zink aus Stahlwerksstäuben ist das erfindungsgemäße Verfahren von Vorteil, da der Extraktionsrückstand angereichertes Eisenoxid ist, das in der so vorliegenden Form wieder eisenmetallurgisch verhüttet werden kann. Dadurch ist die rückstandsfreie Veredelung des Abfallstoffs Stahlwerksstaub durch Gewinnung von reinem Zink und weiteren Metallen und Rückgewinnung von Eisen möglich.

Vorzugsweise werden beim erfindungsgemäßen Verfahren die Carbonsäure und/oder substituierte Carbonsäure und/oder deren Alkali- und/oder Ammoniumsalze und/oder Mischungen davon in einer Konzentration von 5 bis 100 Gew% eingesetzt.

Dadurch, daß Lösungen der Carbonsäure und/oder substituierten Carbonsäuren und/oder deren Alkali- und/oder Ammoniumsalze und/oder Mischungen davon in Alkoholen, Aldehyden, Ketonen oder Estern als Extraktionsmittel eingesetzt werden, wird die Co-Extraktion von unerwünschten Matrixelementen des Einsatzmaterials unterdrückt oder verhindert. Unter Matrix wird hierbei der Anteil des Einsatzmaterials verstanden, dessen Extraktion nach dem erfindungsgemäßen Verfahren nicht erwünscht ist.

Mit dem Extraktionsmittel werden vorteilhaft Substanzen, wie z.B. Oxide, Halogenide, Sulfate, Nitrite, Nitrate, Sulfide oder Organosulfide, eingesetzt, um ebenfalls die Co-Extraktion von Matrixelementen des Einsatzmaterials zu beeinflussen.

Beim erfindungsgemäßen Verfahren wird die Extraktion vorzugsweise in einem Temperaturbereich durchgeführt, in dem das Extraktionsmittel flüssig vorliegt oder unter Verflüssigung im zu extrahierenden Reststoff dampfförmig in diesen eingetragen wird.

Nach einer bevorzugten Ausführungsform wird das Nicht-Eisenmetall aus in Form von Feststoffen vorliegenden Reststoffen durch Fest-Flüssig-Extraktion extrahiert. Es ist jedoch auch möglich, das Nicht-Eisenmetall aus in Form von Suspensionen und/oder Lösungen vorliegenden Reststoffen zu extrahieren, wobei die Suspension oder Lösung gleichartiges Extraktionsverhalten im vorher genannten Extraktionsmittel aufweist wie bei einer Extraktion aus Feststoffen selbst.

Gemäß einer weiters bevorzugten Ausführungsform wird das aus den Reststoffen extrahierte Nicht-Eisenmetall aus dem bei der Extraktion gebildeten Extrakt abgeschieden. Vorzugsweise wird das Extraktionsmittel nach dem Abscheiden des Nicht-Eisenmetalls rezirkuliert. Die vollständige Aufarbeitbarkeit des Extrakts und die Wiederverwendbarkeit des Extraktionsmittels sind wesentliche Merkmale des erfindungsgemäßen Verfahrens.

Die Abscheidung kann nach einer Vielzahl von Methoden durchgeführt werden. Nach einer Ausführungsform des erfindungsgemäßen Verfahrens erfolgt die Abscheidung des Nicht-Eisenmetalls aus dem Extrakt durch Kristallisation, gegebenenfalls fraktionierte Kristallisation, wobei dies die einfachste Form der weiteren Verarbeitung der Nicht-Eisenmetallverbindung aus dem Extrakt darstellt. Die direkte industrielle Verwertung des kristallinen Produkts der Extraktion oder der verschiedenen fraktioniert hergestellten Produkte ist möglich. Der kristalline Feststoff kann jedoch in weiterer Folge auch thermisch aufgespalten werden und das Produkt dieser Trennoperation einer pyrometallurgischen oder hydrometallurgischen Weiterverarbeitung nach dem Stand der Technik zugeführt werden (Ullmanns Enzyklopädie der technischen Chemie, 4. Auflage, Band 24, Seiten 601 bis 611),

Gemäß einer weiteren bevorzugten Ausführungsform des erfindungsgemäßen Verfahrens erfolgt die Abscheidung elektrolytisch. Das beladene Extraktionsmittel kann hierbei direkt elektrolytisch durch nicht selektive Abscheidung von Metallen regeneriert werden.

Aus der hydrometallurgischen Gewinnung von Zink ist bekannt, daß ein sehr hoher Reinigungsaufwand für den Elektrolyt betrieben werden muß, um überhaupt eine elektrolytische Abscheidung des unedlen Metalls Zink aus wäßrigen Elektrolytlösungen zu ermöglichen. Bereits Spuren von Verunreinigungen genügen, um die Wasserstoffüberspannung bei der Elektrolyse von Zink so weit abzusenken, daß es zu einer Wiederauflösung von bereits abgeschiedenem Zink von der Kathode kommt (Ullmann's Encyclopedia of Industrial Chemistry, 5. Auflage, Band A28, Seite 524).

Es hat sich jedoch gezeigt, daß beim erfindungsgemäßen Verfahren bei der nicht selektiven elektrolytischen Abscheidung der Metalle aus dem Extrakt die Abscheidung von Zink selbst bei sehr hoher Konzentration an sogenannten Störelementen möglich ist. Diese Eigenschaft ermöglicht beim erfindungsgemäßen Verfahren den Einsatz verschiedener elektrolytischer Abscheidemethoden, die einerseits die Verarbeitung unraffinierter und raffinierter Extrakte und andererseits die direkte elektrolytische Extraktregeneration mit Metallabscheidung sowie Membranelektrolyseverfahren oder Diaphragmenelektrolyseverfahren mit extraktgleichen oder artfremden Anolyten mit chemischer Sauerstoffbindung als Oxid oder mit Bildung von in der Extraktion oxidierend wirksamen Perverbindungen oder mit Freisetzung von gasförmigem Sauerstoff zulassen.

Die elektrolytische Abscheidung aus dem Extrakt kann vollständig oder partiell erfolgen. Gegebenenfalls können einzelne Metalle, insbesondere Zink, auch fraktioniert elektrolytisch abgeschieden werden, etwa nach einer vorherigen raffinierenden Abtrennung von coextrahierten anderen Metallspezies, wobei die Raffination durch Fällung, Zementation an Zinkstaub oder andere geeignete Raffinationsverfahren, wie fraktionierte Kristallisation oder Flüssig-Flüssig-Extraktion, erfolgen kann.

Die elektrolytische Extraktregeneration mit Metallabscheidung kann beim erfindungsgemäßen Verfahren durch verschiedene bekannte Zusätze beeinflußt werden. Beispielhaft seien der Einfluß von Methanol (Gmelins Handbuch der anorganischen Chemie, System-Nr. 32, Zink, Ergänzungsband, Verlag Chemie, 1956, Seite 527) oder der Einfluß von Ammoniak auf das elektrolytische Abscheideverhalten von Zink (Gmelins Handbuch der anorganischen Chemie, System-Nr. 32, Zink, Ergänzungsband, Verlag Chemie, 1956, Seite 247) genannt.

Nach einer weiteren bevorzugten Ausführungsform des erfindungsgemäßen Verfahrens erfolgt die Abscheidung chemisch, wie z.B. durch Fällung. Eine Raffinierung des Extrakts ist hierbei durch bekannte Methoden möglich. Stellvertretend sei die Zink/Bleitrennung durch Fällung von Blei als Sulfat genannt (Gmelins Handbuch der anorganischen Chemie, System-Nr. 32, Zink, Verlag Chemie, 1932, Seite 93). Auch die Trennung von Zink und den Metallen Kupfer, Cadmium, Nickel und Kobalt ist dokumentiert und in der praktischen Anwendung bewährt (Ullmanns Enzyklopädie der technischen Chemie, 4. Auflage, Band 24, Seite 599; Gmelins Handbuch der anorganischen Chemie, System-Nr. 32, Zink, Ergänzungsband, Verlag Chemie, 1956, Seiten 222 bis 229). Diese Trennverfahren sind auch beim erfindungsgemäßen Verfahren anwendbar.

Gemäß einer weiteren Ausführungsform des Verfahrens erfolgt die Abscheidung thermisch, wobei als Möglichkeiten eine thermische Trennung durch Spaltung oder Sublimation, sowie eine thermisch-metallurgische oder chemische Trennung des Lösungsmittels von den extrahierten Spezies unter Überführung dieser in Oxide oder - durch Zusatz von reduzierend wirkenden Additiven - in das Metall, sowie eine Rückführung des Extraktionsmittels oder Extraktionsmittelgemisches genannt sind.

Eine entscheidende Eigenschaft von Salzen der erfindungsgemäß eingesetzten Carbonsäuren ist die thermische Spaltbarkeit, ein Verfahrensschritt, bei dem das Extraktionsmittel aus dem Extrakt vollständig zurückgewonnen werden kann. Diese Forderung der Rückführbarkeit des Extraktionsmittels ist beispielsweise bei der extraktiven Trennung von Eisen und Nicht-Eisenmetallen mit Essigsäure erfüllt, da die Acetate bei höheren Temperaturen gespalten werden. So wird Zinkacetat bei Temperaturen über 200 Grad Celsius in Essigsäure und Zinkoxid übergeführt. Auch Eisenacetat zerfällt in Eisenoxid und Essigsäure.

Die Verarbeitung der mittels einer der genannten Methoden erhaltenen, aus dem Extrakt als Feststoff dargestellten Metallverbindungen kann nach einer thermischen Abtrennung des Extraktionsmittels durch vollständige oder partielle Lösung in einem echten Elektrolyten, wie Schwefelsäure oder Salzsäure, oder Elektrolytgemischen, mit anschließender prozeßspezifischer Elektrolytreinigung durch Fällung, Zementation oder andere geeignete Trennverfahren und elektrolytischer Abscheidung des Metalls erfolgen.

Nach einer weiteren bevorzugten Ausführungsform wird dem Extrakt, nach Abtrennung vom Extraktionsrückstand, eine stärkere Säure als die im Extraktionsmittel enthaltene Säure zugegeben und das Extraktionsmittel aus dem so aufbereiteten Extrakt destillativ abgetrennt.

Bevorzugte Ausführungsformen der Erfindung werden nachfolgend anhand von Ausführungsbeispielen näher erläutert.

### Beispiel 1 (nicht erfindungsgemäß)

Jeweils 10 g eines Stahlwerkstaubes wurden mit je 100 ml Essigsäure unterschiedlicher Konzentration (25 bis 100 Gew%) bei Raumtemperatur extrahiert. Nach einer Extraktionszeit von einer Stunde wurde der Extrakt vom festen Raffinat bzw. Extraktionsrückstand getrennt. Beide Phasen wurden analysiert. Dabei wurden folgende Ergebnisse gefunden:

Zusammensetzung des eingesetzten Stahlwerkstaubes in [g/kg]:

| | |
|---|---|
| Zink | 273,00 |
| Eisen | 179,00 |
| Blei | 31,70 |
| Kupfer | 4,52 |
| Nickel | 0,61 |
| Cadmium | 0,19 |
| Kobalt | 0,03 |
| Natrium | 8,50 |
| Kalium | 6,30 |

Extraktionsgrad für Zink und Eisen, bezogen auf die eingesetzte Menge bei Variation der Konzentration an Essigsäure im Extraktionsmittel:

| Gew% Essigsäure | Extraktionsgrad Zink (%) | Extraktionsgrad Eisen (%) |
|---|---|---|
| 25 | 92,30 | 6,10 |
| 50 | 93,40 | 6,70 |
| 80 | 90,80 | 5,00 |
| 100 | 35,50 | 0,60 |

Die Ergebnisse zeigen, daß Zink in einem weiten Konzentrationsbereich des Extraktionsmittels Essigsäure mit hoher Ausbeute extrahiert wird. Nur bei wasserfreiem Extraktionsmittel sinkt der Extraktionsgrad bei Raumtemperatur. Der Extraktionsgrad von Fe-III sinkt mit zunehmender Konzentration des Extraktionsmittels.

### Beispiel 2 (nicht erfindungsgemäß)

320 g des gleichen Staubes wurden mit 800 ml Essigsäure mit einem Gehalt von 20 Gew% bei Raumtemperatur extrahiert. Der zeitliche Verlauf der Konzentration verschiedener Elemente im Extrakt wurde untersucht.

| t [min] | Zn [g/l] | Pb [g/l] | Cd [g/l] | Fe [g/l] | Cu [g/l] | Ni [g/l] | Na [g/l] | K [g/l] |
|---|---|---|---|---|---|---|---|---|
| 30 | 79,00 | 7,20 | 0,13 | 1,55 | 0,53 | 0,16 | 7,00 | 3,60 |
| 60 | 82,00 | 7,20 | 0,12 | 1,15 | 0,54 | 0,17 | 7,00 | 3,60 |
| 75 | 83,00 | 7,60 | 0,13 | 1,10 | 0,54 | 0,20 | 7,00 | 3,60 |
| 90 | 82,00 | 7,40 | 0,13 | 1,01 | 0,56 | 0,22 | 7,00 | 3,70 |
| 105 | 83,00 | 7,40 | 0,13 | 0,90 | 0,56 | 0,24 | 7,00 | 3,60 |
| 120 | 83,00 | 7,60 | 0,13 | 0,78 | 0,57 | 0,25 | 7,00 | 3,60 |

Aus der Tabelle ist ersichtlich, daß das Extraktionsverhalten der Metalle mit dem Löslichkeitsverhalten der jeweiligen Acetate in wäßriger Lösung konform geht. Metalle mit geringer Löslichkeit zeigen, mit Ausnahme von Fe-III, eine leicht zunehmende Konzentration in der Extraktphase. Metallacetate mit hoher Löslichkeit in wäßriger Lösung werden bereits innerhalb von 30 Minuten extrahiert.

### Beispiel 3 (nicht erfindungsgemäß)

Das Extraktionsmittel aus Versuch 2 wurde nach 120 Minuten vom verbleibenden Feststoff getrennt. Nach einer Alterungsphase von zwei Stunden und der Abtrennung eines Konzentrationsniederschlages durch Filtration wurde der Elektrolyt in einer Elektrolysezelle einer nicht selektiven direkten Elektrolyse unterworfen. Als Kathode wurde zur Erzielung konstanter Kathodenstromdichten ein Aluminiumrohr eingesetzt. Als Anode wurde eine Platinnetzelektrode verwendet. Die Elektrolyse wurde bei konstanter Kathodenstromdichte von 930 A/m² betrieben. Zu Beginn der Elektrolyse hatte das beladene Extraktionsmittel eine Temperatur von 22°C. Am Ende dieser Untersuchung wurde eine Badtemperatur von 35°C gemessen.

Die Elektrolyse wurde über einen Zeitraum von 100 Minuten betrieben. Der Strom/Spannungsverlauf wurde aufgezeichnet. Die Daten sind in der folgenden Tabelle zusammengestellt:

| t [min] | U [V] | I [A] |
|---|---|---|
| 00 | 5,8 | 2,20 |
| 10 | 5,0 | 2,20 |
| 25 | 4,7 | 2,20 |
| 50 | 4,4 | 2,20 |
| 75 | 4,3 | 2,20 |
| 100 | 4,1 | 2,20 |

Die zeitliche Änderung der Badspannung wurde durch die Temperaturänderung und durch die Änderung des Elektrodenabstandes bewirkt. Während des Versuchs wurden aus dem Elektrolysebad Proben gezogen und der zeitliche Verlauf der Abnahme der einzelnen Elemente im Elektrolysebad analytisch bestimmt. Die Ergebnisse sind in der folgenden Tabelle zusammengefaßt:

| t [min] | Zn [g/l] | Pb [g/l] | Cd [g/l] | Fe [g/l] | Cu [g/l] | Ni [g/l] | Na [g/l] | K [g/l] |
|---|---|---|---|---|---|---|---|---|
| 00 | 89,00 | 7,70 | 0,15 | 0,47 | 0,58 | 0,05 | 6,70 | 3,85 |
| 10 | 82,00 | 5,00 | 0,15 | 0,44 | 0,50 | 0,05 | 6,80 | 3,65 |
| 25 | 74,00 | 2,60 | 0,14 | 0,41 | 0,43 | 0,05 | 6,80 | 3.70 |
| 50 | 59,00 | 0,90 | 0,09 | 0,40 | 0,28 | 0,06 | 6,90 | 3,80 |
| 75 | 48,00 | 0,30 | 0,05 | 0,36 | 0,16 | 0,06 | 6,80 | 3,90 |
| 100 | 35,00 | 0,19 | 0,03 | 0,35 | 0,08 | 0,06 | 6,70 | 3,90 |

Wie der Tabelle zu entnehmen ist, wurden aus dem Extrakt durch die zweite Filtration mit dem Niederschlag Eisen und Nickel in erheblicher Menge abgetrennt.

Zu der untersuchten Badzusammensetzung ist festzustellen, daß trotz des extrem hohen Nickelgehaltes im Extrakt die Wasserstoffüberspannung für die Abscheidung von Zink so hoch gehalten werden konnte, daß an der Kathode kaum Wasserstoffbildung beobachtet werden konnte. Üblicherweise muß für die Abscheidung von Zink der Nickelgehalt unter 3 mg/l liegen (Ullmanns Enzyklopädie der technischen Chemie, 4. Auflage, Band 24, Seite 606).

Auch der hohe Eisengehalt hatte keinen meßbaren Einfluß auf das elektrolytische Abscheideverhalten.

### Beispiel 4 (nicht erfindungsgemäß)

Zu 10 ml einer doppelt filtrierten und über zwei Stunden gealterten Probe des Extraktionsversuches 2 wurde tropfenweise bis zur Bildung eines Bleisulfatniederschlages konzentrierte Schwefelsäure pipettiert. Nach der Abtrennung des Niederschlages wurde ein Gehalt an Blei von 6,70 g/l gemessen. Der Versuch zeigt, daß der Extrakt vor der elektrolytischen Abscheidung von Zink raffiniert werden kann.

### Beispiel 5 (nicht erfindungsgemäß)

42 ml einer Probe aus Versuch 1, die durch Extraktion mit Essigsäure mit einem Gehalt von 50 Gew% hergestellt worden war, wurden bei Raumtemperatur bei einer Stromdichte von 400 A/m² bei konstanter Stromstärke von 0,63 A und einer Elektrolysezeit von 25 Minuten einer elektrolytischen Metallabscheidung unterzogen. Es wurden eine plane Aluminiumkathode und eine plane Platinnetzanode verwendet. Bei diesem Versuch wurden aus dem Extrakt das Zink von einer Zink-Eingangskonzentration von 25 g/l auf eine Restkonzentration von 18 g/l abgeschieden. Der Versuch zeigt, daß es möglich ist, durch Elektrolyse Zink aus verdünnter unraffinierter Extraktlösung direkt abzuscheiden.

### Beispiel 6 (nicht erfindungsgemäß)

7 g Stahlwerksstaub enthaltend 35,8 Gew% Zn, 5,41 Gew% Pb und 13,35 Gew% Fe wurden mit 70 g Extraktionsmittel, bestehend aus 14 g Essigsäure und 56 g Wasser, extraktiv bei 20°C behandelt.

Die erhaltene Extraktphase enthielt 82,7 Gew% Zn, 65,9 Gew% Pb und 8,7 Gew% Fe.

### Beispiel 7

Beispiel 6 wurde wiederholt, wobei jedoch ein Extraktionsmittel verwendet wurde, welches aus 14 g Aceton, 14 g Essigsäure und 42 g Wasser bestand.

Die erhaltene Extraktphase enthielt 79,2 Gew% Zn, 43,1 Gew% Pb und 7,5 Gew% Fe.

### Beispiel 8

Beispiel 6 wurde wiederholt, wobei jedoch ein Extraktionsmittel verwendet wurde, welches aus 14 g Isopropanol, 14 g Essigsäure und 42 g Wasser bestand.

Die erhaltene Extraktphase enthielt 79,1 Gew% Zn, 45,5 Gew% Pb und 6,5 Gew% Fe.

Mit den Beispielen 7 und 8 ist dokumentiert, daß durch Modifikation des Extraktionsmittels die Ausbeute an einzelnen Extraktanten signifikant beeinflußt werden kann.

## Patentansprüche

1. Verfahren zum Aufbereiten von zumindest ein Nicht-Eisenmetall, vorzugsweise gewählt aus der Gruppe umfassend Zink, Blei, Nickel, Kupfer und Cadmium, und/oder Verbindungen davon enthaltenden Reststoffen, wobei das Nicht-Eisenmetall aus den Reststoffen mittels eines eine Carbonsäure und/oder eine substituierte Carbonsäure und/oder deren Alkali- und/oder Ammoniumsalze und/oder Mischungen davon enthaltenden Extraktionsmittels extrahiert wird, welches Extraktionsmittel ferner einen Alkohol, einen Aldehyd, ein Keton oder einen Ester enthält.

2. Verfahren nach Anspruch 1, **dadurch gekennzeichnet, daß** als Carbonsäure eine Fettsäure mit 1 bis 18 C-Atomen im Molekül, insbesondere Essigsäure oder Propionsäure, eingesetzt wird.

3. Verfahren nach Anspruch 1 oder 2, **dadurch gekennzeichnet, daß** als Reststoffe Eisen und Nicht-Eisenmetall enthaltende Reststoffe, insbesondere Hüttenwerksreststoffe, eingesetzt werden.

4. Verfahren nach einem der Ansprüche 1 bis 3, **dadurch gekennzeichnet, daß** ein bei der Extraktion verbleibender, gegebenenfalls eisenhältiger, Extraktionsrückstand einer weiteren Verarbeitung, insbesondere einem Hüttenwerk, zugerührt wird.

5. Verfahren nach einem der Ansprüche 1 bis 4, **dadurch gekennzeichnet, daß** die Carbonsäure und/oder substituierte Carbonsäuren und/oder deren Alkali- und/oder Ammoniumsalze und/oder Mischungen davon in einer Konzentration von 5 bis 100 Gew% eingesetzt werden.

6. Verfahren nach einem der Ansprüche 1 bis 5, **dadurch gekennzeichnet, daß** mit dem Extraktionsmittel Substanzen, wie z.B. Oxide, Halogenide, Sulfate, Nitrite, Nitrate, Sulfide oder Organosulfide, eingesetzt werden.

7. Verfahren nach einem der Ansprüche 1 bis 6, **dadurch gekennzeichnet, daß** eine Extraktion in einem Temperaturbereich durchgeführt wird, in dem das Extraktionsmittel flüssig vorliegt oder unter Verflüssigung im zu extrahierenden Reststoff dampfförmig in diesen eingetragen wird.

8. Verfahren nach einem der Ansprüche bis 7, **dadurch gekennzeichnet, daß** das Nicht-Eisenmetall aus in Form von Feststoffen vorliegenden Reststoffen durch Fest-Flüssig-Extraktion extrahiert wird.

9. Verfahren nach einem der Ansprüche 1 bis 7, **dadurch gekennzeichnet, daß** das Nicht-Eisenmetall aus in Form von Suspensionen und/oder Lösungen vorliegenden Reststoffen extrahiert wird.

10. Verfahren nach einem der Ansprüche 1 bis 9, **dadurch gekennzeichnet, daß** das aus den Reststoffen extrahierte Nicht-Eisenmetall aus dem bei der Extraktion gebildeten Extrakt abgeschieden wird.

11. Verfahren nach Anspruch 10, **dadurch gekennzeichnet, daß** das Extraktionsmittel nach dem Abscheiden des Nicht-Eisenmetalls rezirkuliert wird.

12. Verfahren nach Anspruch 10 oder 11, **dadurch gekennzeichnet, daß** die Abscheidung durch Kristallisation, gegebenenfalls fraktionierte Kristallisation, erfolgt.

13. Verfahren nach Anspruch 10 oder 11, **dadurch gekennzeichnet, daß** die Abscheidung elektrolytisch erfolgt.

14. Verfahren nach Anspruch 10 oder 11, **dadurch gekennzeichnet, daß** die Abscheidung chemisch, wie z.B. durch Fällung, erfolgt.

15. Verfahren nach Anspruch 10 oder 11, **dadurch gekennzeichnet, daß** die Abscheidung thermisch erfolgt.

16. Verfahren nach einem der Ansprüche 1 bis 9, **dadurch gekennzeichnet, daß** dem Extrakt, nach Abtrennung vom Extraktionsrückstand, eine stärkere Säure als die im Extraktionsmittel enthaltene Säure zugegeben wird und daß das Extraktionsmittel aus dem so aufbereiteten Extrakt destillativ abgetrennt und rezirkuliert wird.

## Claims

1. Method for processing at least one non-ferrous metal, preferably chosen from the group including zinc, lead, nickel, copper and cadmium, and/or residual materials containing compounds thereof, the non-ferrous metal being extracted from the residual materials by means of an extracting agent containing a carboxylic acid and/or a substituted carboxylic acid and/or their alkali metal and/or ammonium salts and/or mixtures thereof, this extracting agent further containing an alcohol, an aldehyde, a ketone or an ester.

2. Method according to Claim 1, **characterised in that**, as carboxylic acid, a fatty acid with from 1 to 18 C atoms per molecule is used, particularly acetic acid or propionic acid.

3. Method according to Claim 1 or 2, **characterised in that** residual materials containing iron and non-ferrous metal, particularly residual materials from metallurgical plants, are used as residual materials.

4. Method according to one of Claims 1 to 3, characterised in that an extraction residual material remaining from the extraction and possibly containing iron is subjected to a further processing, particularly metallurgical processing.

5. Method according to one of Claims 1 to 4, characterised in that the carboxylic acid and/or substituted carboxylic acids and/or their alkali metal and/or ammonium salts and/or mixtures thereof are used in a concentration of from 5 to 100% by weight.

6. Method according to one of Claims 1 to 5, characterised in that substances such as oxides, halides, sulphates, nitrites, nitrates, sulphides or organosulphides, for example, are used with the extracting agent.

7. Method according to one of Claims 1 to 6, characterised in that an extraction is carried out in a temperature range in which the extracting agent is present in liquid form, or is introduced as vapour into the residual material to be extracted and then liquefies in it.

8. Method according to one of Claims 1 to 7, characterised in that the non-ferrous metal is extracted from residual materials present in solid form by solid-liquid extraction.

9. Method according to one of Claims 1 to 7, characterised in that the non-ferrous metal is extracted from residual materials present in the form of suspensions and/or solutions.

10. Method according to one of Claims 1 to 9, characterised in that the non-ferrous metal extracted from the residual materials is deposited from the extract formed during the extraction.

11. Method according to Claim 10, **characterised in that** the extracting agent is recycled after deposition of the non-ferrous metal.

12. Method according to Claim 10 or 11, **characterised in that** the deposition takes place by way of crystallisation, optionally fractional crystallisation.

13. Method according to Claim 10 or 11, **characterised in that** the deposition takes place by electrolysis.

14. Method according to Claim 10 or 11, **characterised in that** the deposition is carried out chemically, for example by precipitation.

15. Method according to Claim 10 or 11, **characterised in that** the deposition takes place thermally.

16. Method according to one of Claims 1 to 9, characterised in that, after removal from the extraction residual material, a stronger acid than the acid contained in the extracting agent is added to the extract, and in that the extracting agent is removed by distillation from the extract thus processed, and recycled.

## Revendications

1. Procédé de préparation d'au moins un métal non ferreux, de préférence sélectionné à partir du groupe comprenant le zinc, le plomb, le nickel, le cuivre et le cadmium et/ou des déchets contenant des composés de ceux-ci, dans lequel le métal non ferreux est extrait des déchets au moyen d'un agent d'extraction contenant un acide carbonique et/ou un acide carbonique de substitution et/ou leurs sels alcalins et/ou d'ammonium et/ou leurs mélanges, lequel agent d'extraction contient en outre un alcool, un aldéhyde, un cétone ou un ester.

2. Procédé suivant la revendication 1, **caractérisé en ce qu'**un acide gras présentant 1 à 18 atomes de carbone dans la molécule, en particulier un acide acétique ou un acide propiolique est utilisé comme acide carbonique.

3. Procédé suivant la revendication 1 ou 2, **caractérisé en ce que** des déchets contenant du métal ferreux et non ferreux, en particulier des déchets métallurgiques sont utilisés comme déchets.

4. Procédé suivant l'une des revendications 1 à 3, **caractérisé en ce qu'**un résidu d'extraction, le cas échéant contenant du fer, restant lors d'extraction est amené à un traitement ultérieur, en particulier à une usine métallurgique.

5. Procédé suivant l'une des revendications 1 à 4, **caractérisé en ce que** les acides carboniques et/ou les acides carboniques de substitution et/ou leurs sels alcalins et/ou d'ammonium et/ou leurs mélanges sont utilisés suivant une concentration allant de 5 à 100% en poids.

6. Procédé suivant l'une des revendications 1 à 5, **caractérisé en ce que** des substances telles que par exemple des oxydes, des halogénures, des sulfates, des nitrites, des nitrates, des sulfures ou des organosulfures sont utilisés avec les agents d'extraction.

7. Procédé suivant l'une des revendications 1 à 6, **caractérisé en ce qu'**une extraction est effectuée dans un domaine de température dans lequel l'agent d'extraction se trouve à l'état liquide ou est chargé à l'état gazeux dans celui-ci avec liquéfaction dans les déchets à extraire.

8. Procédé suivant l'une des revendications 1 à 7, **caractérisé en ce que** le métal non ferreux est extrait des déchets présents sous la forme de matières solides par extraction solide-liquide.

9. Procédé suivant l'une des revendications 1 à 7, **caractérisé en ce que** le métal non ferreux est extrait des déchets présents sous la forme de suspensions et/ou de solutions.

10. Procédé suivant l'une des revendications 1 à 9, **caractérisé en ce que** le métal non ferreux extrait des déchets est séparé de l'extrait formé lors de l'extraction.

11. Procédé suivant la revendication 10, **caractérisé en ce que** l'agent d'extraction est remis en circulation après la séparation du métal non ferreux.

12. Procédé suivant la revendication 10 ou 11, **caractérisé en ce que** la séparation est effectuée par cristallisation, le cas échéant par cristallisation fractionnée.

13. Procédé suivant la revendication 10 ou 11, **caractérisé en ce que** la séparation est effectuée par électrolyse.

14. Procédé suivant la revendication 10 ou 11, **caractérisé en ce que** la séparation est effectuée chimiquement, comme par exemple par précipitation.

15. Procédé suivant la revendication 10 ou 11, **caractérisé en ce que** la séparation est effectuée de façon thermique.

16. Procédé suivant l'une des revendications 1 à 9, **caractérisé en ce qu'**un acide plus fort que celui contenu dans l'agent d'extraction est ajouté à l'extrait après séparation du résidu d'extraction et **en ce que** l'agent d'extraction est séparé de l'extrait ainsi préparé de façon distillée et est remis en circulation.
